Europäisches Patentamt

(19) European Patent Office

Office européen des brevets

(11) Publication number: **0 259 923 B1**

# EUROPEAN PATENT SPECIFICATION

(45) Date of publication of patent specification: **06.05.92**   (51) Int. Cl.⁵: **G01F  23/00**, G01F 23/26

(21) Application number: **87201660.5**

(22) Date of filing: **02.09.87**

(54) **Fuel-control device for vehicles and sensor used therefor.**

(30) Priority: **08.09.86 BE 2061049**

(43) Date of publication of application:
   **16.03.88 Bulletin  88/11**

(45) Publication of the grant of the patent:
   **06.05.92 Bulletin  92/19**

(84) Designated Contracting States:
   **AT CH DE ES FR GB GR IT LI LU NL SE**

(56) References cited:
   **DE-A- 2 937 966        GB-A- 2 059 596**
   **GB-A- 2 109 115        US-A- 2 848 666**
   **US-A- 3 111 845        US-A- 3 918 306**

(73) Proprietor: **MYLA SYSTEMS, naamloze vennootschap**
   **Hoge Velden 42**
   **B-2580 Sint-Katelijne-Waver(BE)**

(72) Inventor: **van Hoeymissen, Laurent Modest**
   **Hoge Velden 42**
   **B-2580 Sint-Katelijne-Waver(BE)**

(74) Representative: **Donné, Eddy**
   **M.F.J.Bockstael Arenbergstraat 13**
   **B-2000 Anvers(BE)**

## Description

This invention relates to a fuel monitoring device for vehicles, especially to a device which on the one hand allows to check the fuel consumption and the like, and on the other hand is intended to be able to monitor the acts that are connected with the quantity of fuel contained in the fuel tank.

As is known in transport undertakings, it often happens that the drivers hand in petrol coupons mentioning larger purchased fuel quantities than actually have been tanked up. Without checking apparatus for recording the correct fuel consumption the transport undertaker of course cannot prove such fraud.

Moreover, it is known that the sold quantity indicated by the pump upon refuelling does not always correspond with the quantity that was really delivered, the latter sometimes being 2 % less, naturally to the detriment of the buyer.

In order to solve the first mentioned problem, devices have been developed that are able to record the fuel consumption of a vehicle, so that a transport undertaker, e.g., can compare the quantity of fuel consumed by his lorries with the fuel coupons handed in by the drivers.

In the known devices fuel-consumption meters are used that are placed in the suction line, in other words between the fuel tank and the motor. Herein, the quantity of fuel flowing through is recorded by these meters by means of mechanic or electronic means. Since diesel engines, as is generally known, are provided with a return line by means of which excess fuel is led back to the fuel tank or the suction line, mounting a fuel-consumption meter is accompanied by several difficulties and disadvantages. For elucidating these disadvantages the known systems are shortly described below.

According to a first known fuel monitoring device, a fuel-consumption meter is placed in the suction line. This suction line follows its way to the priming pump and then to the motor. The excess fuel at the motor is piped via the return line. This return line has then to be connected to the suction line after the fuel-consumption meter. For if the return line would be connected to the fuel tank part of the measured fuel would find its way back in the fuel tank whereby the measurement becomes worthless. Returning up to the suction line, however, entails one serious disadvantage : in the case of a small fuel consumption by the motor, the return flow will continue to circulate at a practically constant rate whereby the latter is warmed up as a result of which the motor will protest after some time. In order to solve this problem and for security reasons as well, the known devices are equipped with cooling means, such as a cooling spiral, that is mounted in the driving wind, in such a way that the return fuel is cooled. It is clear that a device of the kind becomes very complicated and expensive thereby.

According to a second known fuel monitoring device, two flow meters are used, one of them in the suction line and the other one in the return line. The consumption can then be calculated from the difference of the measuring results of both flow meters. Obviously, two flow meters are required therefor. In addition, such a solution yields an incorrect image of the real consumption since the temperature of the fuel in the return line is much higher than that of the fuel in the suction line.

Another disadvantage of both devices of the prior art is that an intervention has always to be made on existing lines upon inserting those devices. In many cases the connecting nipples begin to leak after some time so that air is being drawn in and the motor stops. The entire circuit has then to be bleeded.

Further it is recommended in the known systems to protect the flow meters from troubles caused by dust particles by mounting an extra fine prefilter in the suction line. In winter it is exactly these filters that become clogged by solidified fuel, whereby the fuel supply is obstructed and the vehicle stops.

Another disadvantage of the known devices is that they cannot offer an airtight control.

Several of the above said failures can be solved by using a capacitive level sensitive sensor using a capacitive probe having two electrodes, e.g. as disclosed in US 2.848 666 and GB 2.059.596.

The present invention relates to a fuel monitoring device which is able to give measuring data with an accuracy of at least 0.25%.

To this end the invention relates to a fuel monitoring device for vehicles, comprising a level-sensitive sensor placed in the fuel tank of a vehicle, said sensor having a capacitive measuring part, and a processing unit connected to said sensor, whereby said sensor comprises three concentric tubes which are electrically insulated from each other and which extend parallelly with respect to each other in the height of said fuel tank, wherein the inner tubes constitute two electrodes for capacitive measurement, and a converter for converting the measured capacity into an electrical signal which is built in in the head of said sensor, characterised in that the outer tube offers an electric screen for the complete capacitive part, including the converter.

The fact that the converter is built in in the head of the sensor offers manifold advantages. The fact that all capacitive elements and connections are built in in one and the same protective housing formed by the outer tube, results in electrical screening of the capacitance part.

For the central processing unit preferably a programmable microprocessor is used known by itself. Further, the latter is provided with a small printing unit or the like , which depending on the used microprocessor and the program is able to release a large amount of information relating to the quantity of fuel in the fuel tank and to the use of said fuel.

The invention also relates to the above-mentioned sensor.

In order to better demonstrate the features according to the invention, a preferred embodiment is described below as an example without being limited thereto and with reference to the accompanying drawings wherein :

Figure 1 schematically represents the device according to the invention;

figure 2 represents a section of a sensor according to the invention, such as it is preferably applied in the device of figure; 1;

figure 3 represents a view according to arrow F3 of figure 2;

figure 4 represents a view according to arrow F4 of figure 2;

figure 5 represents an electronic converter for the signals of the sensor; and

figure 6 represents a variant of the part that is indicated in figure 5 and F6.

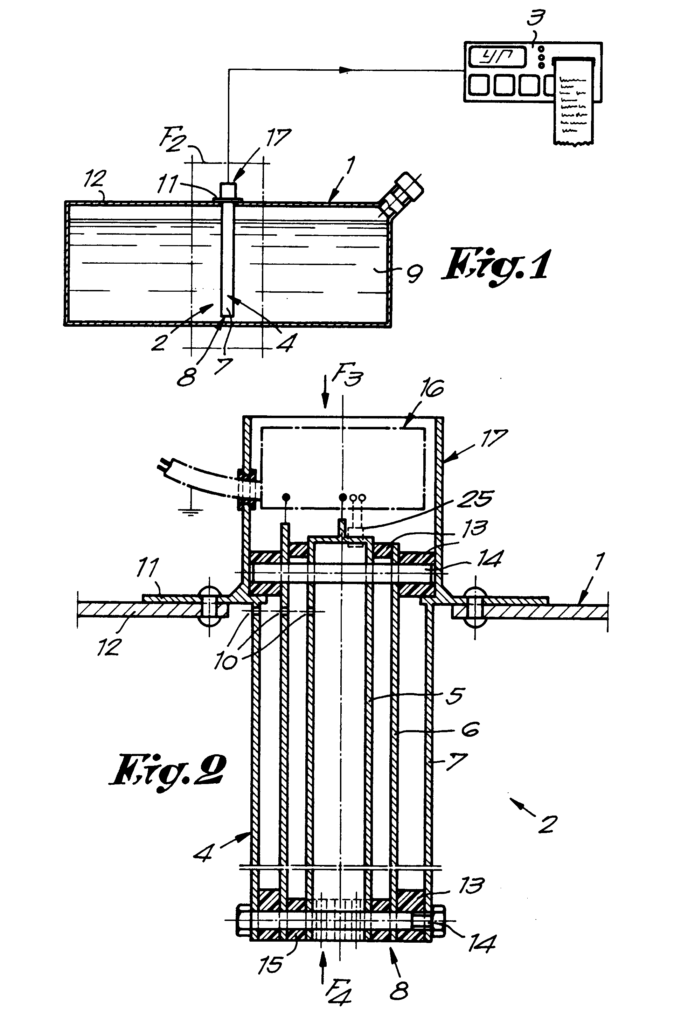

As represented in figure 1, the fuel monitoring device according to the invention consists of a sensor 2 placed in the fuel tank 1 of a vehicle, and of a central processing unit 3 placed in the vehicle and connected to said sensor 2. Obviously, the disadvantages of any prior art fuel monitoring device for vehicles are avoided by such an assembly, especially when the sensor 2 is directly placed in tank 1.

Sensor 2 substantially consists of a capacitive measuring part 4. Said measuring part 4 preferably extends over the entire height of tank 1 and is placed in the middle of it.

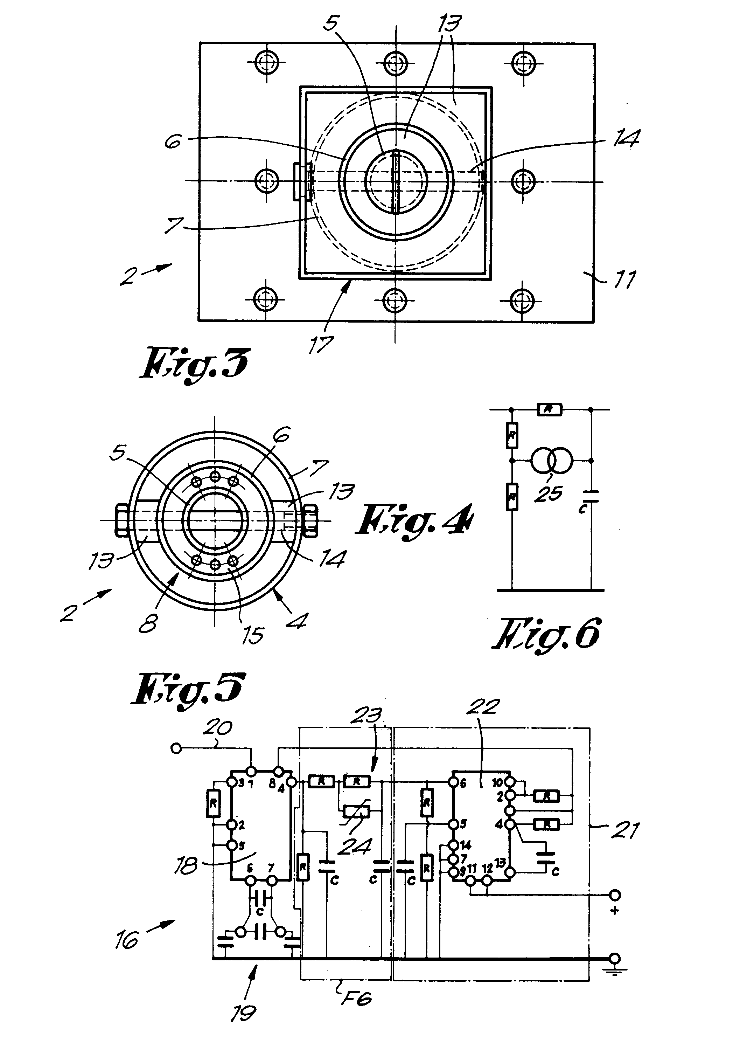

Figures 2, 3 and 4 represent the most preferred embodiment of said sensor 2. It consists of three electroconductive concentric tubes 5, 6 and 7. The inner tubes 5 and 6 form electrodes thereby. The outer tube 7 forms an electric screen for preventing the capacitive part from being touched by objects. At the lower side 8, the tubes 5, 6 and 7 show free passages so that the fuel 9 can reach as far as between the electrodes 5 and 6, in other words the tubes. So, at the top vent holes 10 are provided.

The outer type 7 is provided with a radial mounting flange 11 allowing said sensor 2 to be mounted in the wall 12 of said tank 1.

Naturally, the necessary sealings 13 made of fuel-resistant PVC are provided. Said sealings 13 as well as bolts 14 secure the relative position of the three tubes 5, 6 and 7. Said bolts 14 are preferably made of nylon.

In addition, at the lower part 8 a damping ring 15 may be applied between both tubes 5 and 6 in order to prevent violent oscillations of the fuel level between said tubes 5 and 6.

To the measuring part 4 a signal converter 16 is connected, which is built in into the head 17 of said sensor 2, which lies outside the fuel tank 1. Said signal converter 16 consists of an electronic circuit as represented in figure 5, more specifically an electronic capacitance - frequency conversion circuit. According to the invention use is made herein of an integrated circuit 19. A reference voltage is applied to the input terminal "4". Over the inputs "6" and "7" the sensor capacity 19 is connected, in other words these are the inputs with which the tubes 5 and 6 respectively are connected. Further, an output terminal 20 is provided.

The reference voltage at the input "4" of the ced by a voltage stabiliser 21 whose main component is an integrated circuit 22.

In addition, means 23 may be provided for carrying out a temperature compensation, wherein an influence is exerted on the reference voltage at the input "4" of the integrated circuit 18. For that purpose an NTC resistor 24 can be applied as a basic component. By such a temperature compensation it is avoided that an erroneous measurement would be made on temperature changes , whereby the fuel 9 expands or shrinks.

All the other components, mainly resistors R and capacitors C are additional converter elements.

The operation of the fuel monitoring device according to the invention can be simply deduced from the figures. It is based on the fact that the sensor capacity 19 changes as a function of the level of fuel 9 between the tubes 5 and 6. Depending thereon, a signal is produced at the output 20, whose frequency varies in correspondence with the sensor capacity 19. The signal of output 20 is processed in the central processing unit 3 to a large amount of data and preferably recorded by means of a printing unit on a paper tape or the like.

The central processing unit 3 consists of a microprocessor. This microprocessor analyses the changes of frequency at the output 20 as a function of time. Of course, mean values can be calculated over determined periods of time.

Since microprocesssors and their use are fully known to those skilled in the art, it is of no use to enter into this matter.

Preferably, the central processing unit 3 is provided with a display representing the contents of fuel tank 1.

Preferably, the microprocessor of the central processing unit is programmed in such a way that at least the following measuring values are recorded :

- the quantity of fuel tanked up;
- the quantity of fuel taken from the fuel tank;
- the number of hours and the consumption by litres in the idling period of the vehicle;
- the number of hours and the consumption by litres outside the idling period of the vehicle;
- the peak consumption;
- the hours of standstill of the vehicle;
- the total consumption over well-determined periods of time;
- the initial contents of the tank at a recording period;
- the final contents of the tank at a recording period;
- date and time of all measuring data.

Naturally, the signal converter 16 can also be composed of components other than those represented in figure 5.

According to a variant, a temperature converter 25 is used instead of an NTC-resistor 24, especially as represented in figure 6. As represented in figure 2, the temperature converter 25 can co-operate with the tube 5. For said tube 5, which is made of copper or the like, assumes the temperature of the fuel 9. The temperature converter 25 converts the temperature of temperature converter 25 into an electrical signal which influences the reference voltage of the electronic capacitance frequency conversion circuit. It should still be remarked that if the embodiment of figure 5 is used, the NTC-resistor 24 can be placed on the print and can co-operate directly or indirectly with said tube 5.

The present invention is by no means limited to the exemplified embodiments represented in the figures.

## Claims

1. Fuel monitoring device for vehicles, comprising a level-sensitive sensor (2) placed in the fuel tank (1) of a vehicle, said sensor (2) having a capacitive measuring part, and a processing unit (3) connected to said sensor (2), whereby said sensor (2) comprises three concentric tubes (5,6,7) which are electrically insulated form each other and which extend parallelly with respect to each other in the height of said fuel tank (1), wherein the inner tubes (5,6) constitute two electrodes for capacitive measurement, and a converter (16) for converting the measured capacity into an electrical signal which is built in in the head (17) of said sensor (2), characterised in that the outer tube (7) offers an electric screen for the complete capacitive part, including the converter (16).

2. Fuel monitoring device according to claim 1, characterised in that a mounting flange (11) is provided at said outer tube (7).

3. Fuel monitoring device according to claim 2, characterised in that said three concentric tubes (5,6,7) are fixed to each other at the height of said mounting flange (11) and are insulated from each other by means of sealings (13) made of fuel-resistant plastic.

4. Fuel monitoring device according to any of the foregoing claims, characterised in that a damping ring (15) is applied at the underside (8) of said measuring part (4) to prevent violent oscillations of the fuel level between the electrodes, said damping ring (15) being mounted between said concentric tubes (5,6) which form the electrodes.

5. Fuel monitoring device according to claim 4, characterised in that the damping ring is a flat annular plate provided with holes.

6. Fuel monitoring device according to any of the foregoing claims, characterised in that at least a number of said concentric tubes (5,6,7) is provided with vent holes (10).

7. Fuel monitoring device according to any of the foregoing claims, characterised in that said signal converter (16) consists in an electronic capacitance-frequency conversion circuit.

8. Fuel monitoring device according to claim 7, characterised in that said signal converter (16) is provided with means (23) for carrying out a temperature compensation.

9. Fuel monitoring device according to claim 8, characterised in that said means (23) for carrying out a temperature compensation consists of a NTC-resistor (24), that influences the reference voltage of the electronic capacitance-frequency conversion circuit.

10. Fuel monitoring device according to claim 8, characterised in that said means (23) cor carrying out a temperature compensation consists of a temperature converter (25), which converts the temperature of the temperature converter (25) into an electrical signal that influences the reference voltage of the electronic capacitance-frequency conversion circuit.

**11.** Fuel monitoring device according to any of the foregoing claims, characterised in that said processing unit (3) consists of a microprocessor, which is connected to a printing unit.

## Revendications

**1.** Dispositif de surveillance de carburant pour véhicules, comprenant un détecteur sensible au niveau (2) placé dans le réservoir de carburant (1) d'un véhicule, ledit détecteur (2) étant muni d'un élément capacitif de mesure, et une unité de traitement (3) reliée audit détecteur (2), ledit détecteur comprenant trois tubes concentriques (5, 6, 7) qui sont isolés électriquement l'un par rapport à l'autre et qui s'étendent parallèlement l'un à l'autre à hauteur dudit réservoir de carburant (1), dans lequel les tubes internes (5, 6) constituent deux électrodes permettant une mesure capacitive, ainsi qu'un convertisseur (16) pour transformer la capacité mesurée en un signal électrique, qui est monté dans la tête (17) dudit détecteur (2), **caractérisé en ce que** le tube externe (7) procure un écran électrique pour l'élément capacitif dans son ensemble, y compris le convertisseur (16).

**2.** Dispositif de surveillance de carburant selon la revendication 1, **caractérisé en ce que** ledit tube externe (7) est muni d'une bride de montage (11).

**3.** Dispositif de surveillance de carburant selon la revendication 2, **caractérisé en ce que** lesdits trois tubes concentriques (5, 6, 7) sont fixés l'un à l'autre à hauteur de ladite bride de montage (11) et ils sont isolés l'un par rapport à l'autre au moyen de joints étanches (13) réalisés en plastique résistant au carburant.

**4.** Dispositif de surveillance de carburant selon l'une quelconque des revendications précédentes, **caractérisé en ce qu'**on applique un anneau amortisseur (15) du côté inférieur (8) dudit élément de mesure (4) pour empêcher des oscillations violentes du niveau de carburant entre les électrodes, ledit anneau amortisseur (15) étant monté entre lesdits tubes concentriques (5, 6) qui forment les électrodes.

**5.** Dispositif de surveillance de carburant selon la revendication 4, **caractérisé en ce que** l'anneau amortisseur est une plaque annulaire plate dans laquelle on a pratiqué des trous.

**6.** Dispositif de surveillance de carburant selon l'une quelconque des revendications précédentes, **caractérisé en ce qu'**on pratique des trous d'aération (10) dans au moins un certain nombre desdits tubes concentriques (5, 6, 7).

**7.** Dispositif de surveillance de carburant selon l'une quelconque des revendications précédentes, **caractérisé en ce que** ledit convertisseur de signaux (16) consiste en un circuit électronique de transformation capacitance-fréquence.

**8.** Dispositif de surveillance de carburant selon la revendication 7, **caractérisé en ce que** ledit convertisseur de signaux (16) est muni d'un moyen (23) destiné à réaliser une compensation de température.

**9.** Dispositif de surveillance de carburant selon la revendication 8, **caractérisé en ce que** ledit moyen (23) destiné à réaliser une compensation de température consiste en une résistance NTC (24) qui influence la tension de référence du circuit électronique de transformation capacitance-fréquence.

**10.** Dispositif de surveillance de carburant selon la revendication 8, **caractérisé en ce que** ledit moyen (23) destiné à réaliser une compensation de température consiste en un convertisseur de température (25) qui transforme la température du convertisseur de température (25) en un signal électrique qui influence la tension de référence du circuit électronique de transformation capacitance-fréquence.

**11.** Dispositif de surveillance de carburant selon l'une quelconque des revendications précédentes, **caractérisé en ce que** ladite unité de traitement (3) consiste en un microprocesseur qui est relié à une unité imprimante.

## Patentansprüche

**1.** Kraftstoffüberwachungsvorrichtung für Fahrzeuge, bestehend aus einem, im Fahrzeugbehälter (1) montierten kraftstoffspiegelabhängigen Messwertfühler (2), wobei besagter Messwertgeber (2) einen kapazitiven Messteil besitzt, und einer mit dem besagten Messwertgeber (2) verbundenen Verarbeitungseinheit (3), wobei besagter Meswertgeber (2) aus drei konzentrischen, elektrisch von einander isolierten Rohren (5, 6, 7) besteht, die sich parallel zueinander in der Höhenrichtung des besagten Kraftstoffbehälters (1) ausstrecken, wobei die inneren Rohren (5, 6) zwei Elektroden für kapazitive Messungszwecke bilden, und einem Wandler (16) zur Umwandlung der gemessenen Kapazität in ein elektrisches Signal, der im Kopf (17) des besagten Messwertgebers (2) eingebaut ist, dadurch gekennzeichnet, dass das äussere Rohr (7) einen elektrischen Schirm für den gesamten kapazitiven Teil, einschliesslich des Wandlers (16), bildet.

2. Kraftstoffüberwachungsvorrichtung nach Anspruch 1, dadurch gekennzeichnet, dass ein Montageflansch (11) am besagten äusseren Rohr (7) vorgesehen wurde.

3. Kraftstoffüberwachungsvorrichtung nach Anspruch 2, dadurch gekennzeichnet, dass besagte drei konzentrische Rohre (5, 6, 7) an der Stelle des besagten Montageflansches (11) mit einander verbunden sind und von einander isoliert mittels aus Kraftstoffbeständigem Kunststoff hergestellter Dichtungen (13).

4. Kraftstoffüberwachungsvorrichtung nach irgendeinem der vorhergehenden Ansprüche, dadurch gekennzeichnet, dass ein Dämpfungsring (15) an der unteren Seite (8) des besagten Messteils (4) angebracht wurde um kräftige Schwankungen des Kraftstoffspiegels zwischen den Elektroden zu vermeiden, wobei besagter Dämpfungsring (15) zwischen besagten konzentrischen Rohren (5, 6), die die Elektroden bilden, montiert ist.

5. Kraftstoffüberwachungsvorrichtung nach Anspruch 4, dadurch gekennzeichnet, dass der Dämpfungsring eine mit Löchern versehene flache ringförmige Platte ist.

6. Kraftstoffüberwachungsvorrichtung nach irgendeinem der vorhergehenden Ansprüche, dadurch gekennzeichnet, dass wenigstens eine Anzahl besagter konzentrischer Rohre (5, 6, 7) mit Entlüftungsöffnungen versehen ist.

7. Kraftstoffüberwachungsvorrichtung nach irgendeinem der vorhergehenden Ansprüche, dadurch gekennzeichnet, dass besagter Signalwandler (16) aus einem elektronischen Kapazität-Frequenz Wandlerkreis besteht.

8. Kraftstoffüberwachungsvorrichtung nach Anspruch 7, dadurch gekennzeichnet, dass besagter Signalwandler (16) mit Mitteln (23) versehen ist um einen Temperaturausgleich durchzuführen.

9. Kraftstoffüberwachungsvorrichtung nach Anspruch 8, dadurch gekennzeichnet, dass besagte Mittel (23) zur Durchführung eines Temperaturausgleichs aus einem NTC-Widerstand (24) bestehen, der die Bezugsspannung des elektronischen Kapazität-Frequenz Kreises beeinflusst.

10. Kraftstoffüberwachungsvorrichtung nach Anspruch 8, dadurch gekennzeichnet, dass besagte Mittel (23) zur Durchfuhrung eines Temperaturausgleichs aus einem Temperaturwandler (25) bestehen, der die Temperatur des Temperaturwandlers (25) in ein elektrisches Signal umwandelt, das die Bezugsspannung des elektronischen Kapazität-Frequenz Kreises beeinflusst.

11. Kraftstoffüberwachungsvorrichtung nach irgendeinem der vorhergehenden Ansprüche, dadurch gekennzeichnet, dass besagte Verarbeitungseinheit (3) aus einem Mikroprozessor besteht, der mit einer Druckeinheit verbunden ist.

**Fig.1**

**Fig.2**

*Fig.3*

*Fig.4*

*Fig.6*

*Fig.5*